# EUROPEAN PATENT APPLICATION

(11) **EP 2 854 206 A1**
(43) Date of publication of application: **01.04.2015**
(21) Application number: 13859936.0
(22) Date of filing: 29.11.2013
(51) Int. Cl.: H01M 4/587, H01M 4/48, H01M 4/134, H01M 10/052

(54) **HIGH-CAPACITY ANODE ACTIVE MATERIAL FOR LITHIUM SECONDARY BATTERY, MANUFACTURING METHOD THEREFOR, AND LITHIUM SECONDARY BATTERY COMPRISING SAME**

(30) Priority: 06.12.2012 KR 20120141076
(71) Applicant: LG Chem, Ltd., Seoul 150-721 (KR)
(72) Inventor: LEE, Yong-Ju, Daejeon 305-738 (KR); KIM, Je-Young, Daejeon 305-738 (KR); KIM, Tae-Hoon, Daejeon 305-738 (KR); PARK, Cheol-Hee, Daejeon 305-738 (KR); KANG, Yoon-Ah, Daejeon 305-738 (KR); LEE, Mi-Rim, Daejeon 305-738 (KR); JUNG, Hye-Ran, Daejeon 305-738 (KR); JEONG, Han-Nah, Daejeon 305-738 (KR)
(74) Representative: Goddar, Heinz J.
(86) International application number: PCT/KR2013/011032
(87) International publication number: WO 2014/088270

(57) **Abstract**

The anode active material of the present invention comprises an amorphous SiOₓ-C composite with a core-shell structure consisting of a core comprising particles of a silicon oxide (SiOₓ) free of Si crystals and a shell which is a coating layer formed on at least a part of the surface of the core and comprising a carbon material, thereby providing high capacity and effectively inhibiting volume expansion which has been caused in the use of Si, to improve life characteristics, and eventually providing a lithium secondary battery having such characteristics.

## Description

### TECHNICAL FIELD

The present invention relates to an anode active material for a lithium secondary battery and a lithium secondary battery using the same. More specifically, the present invention relates to an anode active material having high capacity, which can be controlled in volume expansion.

This application claims priority to Korean Patent Application No. 10-2012-0141076 filed in the Republic of Korea on December 6, 2012, the entire contents of which are incorporated herein by reference.

Also, this application claims priority to Korean Patent Application No. 10-2013-0147718 filed in the Republic of Korea on November 29, 2013, the entire contents of which are incorporated herein by reference.

### BACKGROUND ART

Recently, there has been an increasing interest in energy storage technology. Electrochemical devices have been widely used as energy sources in the fields of cellular phones, camcorders, notebook computers, PCs and electric cars, resulting in intensive research and development into them. In this regard, electrochemical devices are one of the subjects of great interest. Particularly, development of rechargeable secondary batteries has been the focus of attention. Recently, research and development of such batteries are focused on the designs of new electrodes and batteries to improve capacity density and specific energy.

Many secondary batteries are currently available. Among these, lithium secondary batteries developed in the early 1990's have drawn particular attention due to their advantages of higher operating voltages and much higher energy densities than conventional aqueous electrolyte-based batteries, for example, Ni-MH, Ni-Cd, and H₂SO₄-Pb batteries.

Generally, a lithium secondary battery is prepared by using a cathode and an anode which are each made of a material capable of intercalating and disintercalating lithium ions, and filling an organic or polymer electrolyte solution between the cathode and the anode, and the battery produces electrical energy by oxidation and reduction when the lithium ions are intercalated and disintercalated in the cathode and the anode.

In lithium secondary batteries which are currently available, an anode is mostly made of carbon-based materials as an electrode active material. Particularly, graphite which has been commercially available has a real capacity of about 350 to 360 mAh/g which approaches its theoretical capacity of about 372 mAh/g. However, a carbon-based material such as graphite having such a capacity does not meet the demand for high-capacity lithium secondary batteries as an anode active material.

In order to meet such a demand, attempts have been made to use metals as an anode active material, for example, Si and Sn that have a higher charge/discharge capacity than the carbon materials and that allow electrochemical alloying with lithium.

However, this metal-based electrode active material has a great change in volume during charging/discharging, which may cause cracks and micronization to the active material. Secondary batteries using this metal-based anode active material may suddenly be deteriorated in capacity and have reduced cycle life during repeated charging/discharging cycles. In order to reduce cracks and micronization generated from the use of the metal-based anode active material, an oxide of a metal such as Si and Sn has been used as an anode active material.

However, the oxide of a metal such as Si and Sn has low electrical conductivity and requires a conductive coating on the surface thereof. Such a conductive coating may be carried out by a carbon-coating method which specifically comprises pyrolyzing a carbon precursor of a solid, liquid or gas state. In this method, Si crystals present in the Si oxide grow due to heat applied during coating, from which the thickness of the anode active material increases and the life characteristic of secondary batteries deteriorates during lithium intercalation/disintercalation.

### DISCLOSURE

### Technical Problem

Therefore, it is an object of the present invention to provide an anode active material which can provide high capacity, can be controlled in its thickness increase and volume expansion and can prevent the deterioration of life characteristics, a method of preparing the anode active material, and an anode and a secondary battery comprising the anode active material.

### Technical Solution

In order to achieve the object, in accordance with one aspect of the present invention, there is provided an anode active material, comprising an amorphous SiOₓ-C composite with a core-shell structure consisting of a core comprising particles of a silicon oxide (SiOₓ) free of Si crystals and a shell which is a coating layer formed on at least a part of the surface of the core and comprising a carbon material.

In the anode active material according to one embodiment of the present invention, the silicon oxide (SiOₓ) may satisfy that x is 1 or less (x ≤ 1), preferably x is 1 (x = 1). That is, the preferred silicon oxide is SiO.

Also, in the anode active material according to one embodiment of the present invention, the silicon oxide (SiOₓ) particles free of Si crystals may have an average diameter of 0.1 to 30 µm, and a specific surface area of 0.5 to 100 m²/g, the specific surface area being measured by the BET method.

Preferably, the shell may be present in an amount of 1 to 30 parts by weight based on 100 parts by weight of the core, and may have a thickness of 0.01 to 5 µm.

Also, the present invention provides an anode for a lithium secondary battery, comprising a current collector and an anode active material layer formed on at least one surface of the current collector and comprising an anode active material, wherein the anode active material comprises the anode active material defined in the present invention.

Further, the present invention provides a lithium secondary battery, comprising a cathode, an anode, and a separator interposed between the cathode and the anode, wherein the anode is the anode defined in the present invention.

Furthermore, the present invention provides a method of preparing an anode active material comprising an amorphous SiOₓ-C composite with a core-shell structure, comprising: providing particles of a silicon oxide (SiOₓ) as a core, and coating a carbon precursor containing carbon on at least a part of the surface of the core, followed by heat treatment to form a shell as a coating layer, wherein the heat treatment is carried out at a temperature less than 1000 °C, preferably a temperature of 900 °C or less.

Also, the present invention provides an anode active material prepared by the above method.

### Advantageous Effects

The anode active material of the present invention comprises an amorphous SiOₓ-C composite with a core-shell structure consisting of a core comprising particles of a silicon oxide (SiOₓ) free of Si crystals and a shell which is a coating layer formed on at least a part of the surface of the core and comprising a carbon material, thereby providing high capacity and effectively inhibiting volume expansion which has been caused in the use of Si, to improve life characteristics, and eventually providing a lithium secondary battery having such characteristics.

### DESCRIPTION OF THE DRAWINGS

The accompanying drawings illustrate preferred embodiments of the present invention and, together with the foregoing disclosure, serve to provide further understanding of the technical spirit of the present invention. However, the present invention is not to be construed as being limited to the drawings.

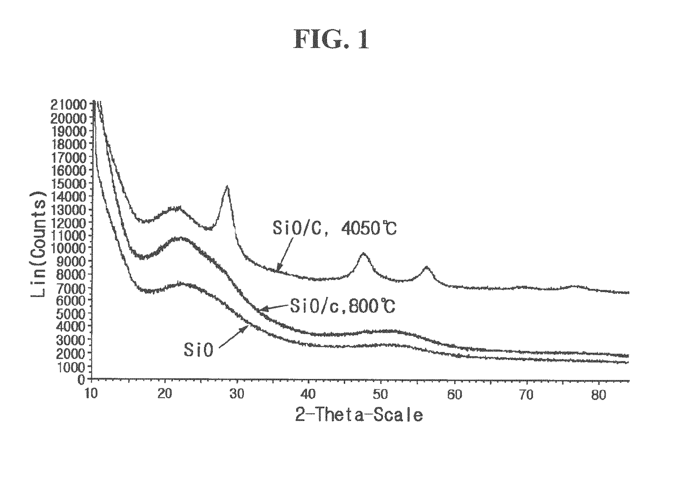

FIG. 1 shows X-ray diffraction curves for anode active materials prepared in Example 1 and Comparative Example 1.

### BEST MODE

Hereinafter, the present invention will be described in detail. Prior to the description, it should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation. Therefore, the embodiments and the drawings proposed herein is just a preferable example for the purpose of illustrations only, not intended to limit the scope of the disclosure, so it should be understood that other equivalents and modifications could be made thereto without departing from the spirit and scope of the disclosure.

The anode active material of the present invention is an amorphous SiOₓ-C composite with a core-shell structure consisting of a core comprising particles of a silicon oxide (SiOₓ) free of Si crystals and a shell which is a coating layer formed on at least a part of the surface of the core and comprising a carbon material.

Anode active material using a silicon oxide have high capacity but may not satisfy a proper degree of electrical conductivity which is an important property capable of facilitating the transfer of electrons in electrochemical reactions. In order to solve this problem, the present inventors have endeavored to develop an anode active material having both high capacity and good electrical conductivity and found that an amorphous SiOₓ-C composite with a core-shell structure, which consists of a core comprising particles of a silicon oxide (SiOₓ) free of Si crystals and a shell which is a coating layer formed on at least a part of the surface of the core and comprising a carbon material, can have a proper degree of electrical conductivity by carbon coating and can be controlled in thickness expansion by the silicon oxide (SiOₓ) free of Si crystals to prevent the deterioration of life characteristics and have high capacity.

As used herein, the term "silicon oxide (SiOₓ) free of Si crystals" refers to a silicon oxide (SiOₓ) in which Si crystals are not present. Specifically, the Si crystals mean to include microcrystals having a particle diameter of 5 to 50 nm and crystals having a particle diameter greater than such range.

According to one aspect of the present invention, in the silicon oxide (SiOₓ), x is 1 or less (x ≤ 1), preferably x is 1 (x = 1). That is, the preferred silicon oxide is SiO.

According to one aspect of the present invention, the silicon oxide (SiOₓ) particles free of Si crystals may have an average diameter of 0.1 to 30 µm, and a specific surface area of 0.5 to 100 m²/g, the specific surface area being measured by the BET method. Preferably, the silicon oxide (SiOₓ) particles free of Si crystals have an average diameter of 0.1 to 10 µm and a BET specific surface area of 1.5 to 50 m²/g.

In the present invention, the shell, i.e., the coating layer comprising a carbon material, is formed on at least a part of the surface of the core which comprises particles of the silicon oxide (SiOₓ) free of Si crystals.

According to one aspect of the present invention, the shell may be present in an amount of 1 to 30 parts by weight, preferably 2 to 10 parts by weight, based on 100 parts by weight of the core. When the amount of the shell satisfies such a range, uniform electrical conductivity can be obtained and the volume expansion of the anode active material can be minimized.

Also, according to one aspect of the present invention, the shell may have a thickness of 0.01 to 5 µm, preferably 0.02 to 1 µm. When the thickness of the shell satisfies such a range, uniform electrical conductivity can be obtained and the volume expansion of the anode active material can be minimized.

The present invention also provides a method of preparing an anode active material comprising an amorphous SiOₓ-C composite with a core-shell structure, comprising: providing particles of a silicon oxide (SiOₓ) as a core, and coating a carbon precursor containing carbon on at least a part of the surface of the core, followed by heat treatment to form a shell as a coating layer, wherein the heat treatment is carried out at a temperature less than 1000 °C.

More preferably, the heat treatment is carried out at a temperature of 900 °C or less. Under the condition of such heat treatment temperature, the growth of Si crystals can be effectively controlled.

Specifically, a core comprising silicon oxide particles is provided, and the core is coated with a carbon material on at least a part of the surface thereof, thereby preparing an amorphous SiOₓ-C composite according to the present invention.

The resulting coating layer as a shell is formed in an amount of 1 to 30 parts by weight, preferably 2 to 10 parts by weight, based on 100 parts by weight of the core, and the shell has a thickness of 0.01 to 5 µm, preferably 0.02 to 1 µm.

The coating of a carbon material on the core may be carried out by coating a carbon precursor, followed by heat treatment, to carbonize the carbon precursor. Such a coating may be made by a wetting method, a drying method, or both. For example, as the carbon precursor, a carbon-containing gas such as methane, ethane, propane, acetylene and ethylene may be used, or a liquid carbon precursor such as toluene which is a liquid phase at room temperature may be used by vaporizing by way of chemical vapor deposition (CVD). Also, as the precursor of amorphous carbon, resins such as phenol resins, naphthalene resins, polyvinyl alcohol resins, urethane resins, polyimide resins, furan resins, cellulose resins, epoxy resins and polystyrene resins; and petroleum-based pitches, tar or low molecular weight heavy oils may be used. Further, sucrose maybe used for carbon coating.

In the method of the present invention, the heat treatment is carried out at a temperature less than 1000 °C, preferably a temperature of 900 °C or less, for example, 500 to 1000 °C, preferably 600 to 1000 °C, or 500 to 900 °C, preferably 600 to 900 °C. If the temperature of heat treatment exceeds 1000 °C, Si crystals increase in the core comprising silicon oxide particles, which may not be effective in controlling volume expansion during the intercalation and disintercalation of lithium ions.

The anode active material of the present invention thus prepared can be used in the preparation of an anode according to a conventional method known in the art. Also, in the present invention, a cathode may be prepared by a conventional method known in the art, similar to the preparation of an anode. For example, the anode active material of the present invention is mixed with a binder, a solvent, and optionally a conducting material and a dispersing agent, followed by stirring, to produce a slurry and applying the slurry on a current collector, followed by compression, to prepare an electrode.

The binder which may be used in the present invention includes various kinds of binder polymers, for example, polyvinylidene fluoride-co-hexafluoro propylene (PVDF-co-HFP), polyvinylidenefluoride, polyvinylidene fluoride-co-trichloro ethylene, polyvinylidene fluororide-co-chlorotrifluoro ethylene, polymethyl methacrylate, polyacrylonitrile, polyvinylpyrrolidone, polyvinylacetate, polyethylene-co-vinyl acetate, polyethylene oxide, cellulose acetate, cellulose acetate butyrate, cellulose acetate propionate, cyanoethylpullulan, cyanoethylpolyvinylalchol, cyanoethyl cellulose, cyanoethyl sucrose, pulluan, carboxyl methyl cellulose (CMC), acrylonitrile-styrenebutadiene copolymer, polyimide, polyvinylidenefluoride, polyacrylonitrile, stryrene butadiene rubber (SBR) and a mixture thereof, but the present invention is not limited thereto.

A cathode active material which may be used in the present invention preferably includes a lithium-containing transition metal oxide, for example, any one selected from the group consisting of LiₓCoO₂ (0.5<x<1.3), LiₓNiO₂ (0.5<x<1.3), LiₓMnO₂ (0.5<x<1.3), LiₓMn₂O₄(0.5<x<1.3), Liₓ(NiₐCo_{b}Mn_{c})O₂ (0.5<x<1.3, 0<a<1, 0<b<1, 0<c<1, a+b+c=1), LiₓNi_{1-y}Co_{y}O₂ (0.5<x<1.3, 0<y<1), LiₓCo_{1-y}Mn_{y}O₂ (0.5<x<1.3, 0≤y<1), LiₓNi_{1-y}Mn_{y}O₂ (0.5<x<1.3, O≤y<1), Liₓ(NiₐCo_{b}Mn_{c})O₄ (0.5<x<1.3, 0<a<2, 0<b<2, 0<c<2, a+b+c=2), LiₓMn_{2-z}Ni_{z}O₄ (0.5<x<1.3, 0<z<2), LiₓMn_{2-z}Co_{z}O₄ (0.5<x<1.3, 0<z<2), LiₓCoPO₄ (0.5<x<1.3), LiₓFePO₄ (0.5<x<1.3), and a mixture thereof. The lithium-containing transition metal oxide may be coated with a metal such as Al or a metal oxide. In addition, lithium-containing transition metal sulfide, selenide, or halide may also be used.

After the electrode is prepared, a conventional lithium secondary battery including the cathode, the anode, a separator interposed between the cathode and the anode, and an electrolyte solution may be prepared.

The electrolyte solution used in the present invention comprises a lithium salt as an electrolyte salt. The lithium salt may be any one which is conventionally used in an electrolyte solution for a lithium secondary battery. For example, an anion of the lithium salt may be any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte solution used in the present invention comprises an organic solvent which is conventionally used in an electrolyte solution for a lithium secondary battery, for example, at least one selected from the group consisting of fluoro-ethylene carbonate (FEC), propionate ester, more specifically methyl propionate, ethyl propionate, propyl propionate and buthyl propionate, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethylsulfoxide, acetonitrile, dimethoxyethane, diethoxyethane, vinylene carbonate, sulforane, γ-buryrolactone, propylene sulfite, and tetrahydrofuran and a mixture thereof. In particular, among the above carbonate-based organic solvents, ethylene carbonate and propylene carbonate that are cyclic carbonates are preferred, since they have high viscosity and consequently a high dielectric constant to easily dissociate the lithium salt in the electrolyte. More preferably, such a cyclic carbonate is used as a mixture with a linear carbonate having a low viscosity and a low dielectric constant, such as dimethyl carbonate and diethyl carbonate in a suitable ratio, to provide an electrolyte having a high electric conductivity.

Optionally, the electrolyte solution used in the present invention may further include an additive, such as an overcharge inhibitor which is conventionally used in an electrolyte.

Also, the separator which may be used in the present invention includes a single-layered or multi-layered porous polymer film conventionally used as a separator, and a porous non-woven fabric conventionally used as a separator, and the like. The porous polymer film may be made of polyolefin-based polymer, for example, ethylene homopolymer, propylene homopolymer, ethylene/butene copolymer, ethylene/hexene copolymer, and ethylene/methacrylate copolymer, and the porous non-woven fabric may be made of, for example, high-melting glass fibers, polyethylene terephthalate fibers, and the like. However, the present invention is not limited thereto. Also, such a porous polymer film or a porous non-woven fabric may comprise a porous organic/inorganic coating layer comprising a mixture of inorganic particles and a binder polymer on at least one surface thereof. The binder is present in a part or whole of the inorganic particles to connect and immobilize the inorganic particle therebetween.

The inorganic particles which may be used in the present invention are not particularly limited if an oxidation-reduction reaction does not occur in an operating voltage range (for example, 0 to 5 V based on Li/Li⁺) of an applied electrochemical device. Particularly, inorganic particles having the ability to transfer ions can increase ionic conductivity in electrochemical devices to enhance the performance thereof,

Also, inorganic particles having a high dielectric constant may be used to increase a dissociation rate of an electrolyte salt, e.g., a lithium salt, in a liquid electrolyte, thereby improving an ionic conductivity of the electrolyte.

For these reasons, the inorganic particles are preferably inorganic particles having a dielectric constant of 5 or higher, inorganic particles having the ability to transport lithium ions, or a mixture thereof. Examples of the inorganic particles having a dielectric constant of 5 or higher include BaTiO₃, Pb(Zrₓ,Ti₁₋ₓ)O₃ (PZT, 0<x<1), Pb₁₋ₓLaₓZr_{1-y}Ti_{y}O₃ (PLZT, 0<x<1, 0<y<1), Pb(Mg_{1/3}Nb_{2/3})O₃PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC and TiO₂ inorganic particles, and they may be used alone or as a mixture form.

Among these, inorganic particles such as BaTiO₃, Pb(Zrₓ, Ti₁₋ₓ)O₃ (PZT, 0<x<1), Pb₁₋ₓLaₓZr_{1-y}Ti_{y}O₃ (PLZT, 0<x<1, 0<y<1), (1-x)Pb(Mg_{1/3}Nb_{2/3})O₃-xPbTiO₃ (PMN-PT, 0<x<1) and hafnia (HfO₂) exhibit a high dielectric characteristic of a dielectric constant of 100 or higher, as well as piezoelectricity which occurs when constant pressure is applied to induce a potential difference between both surfaces, thereby preventing the generation of internal short circuit between both electrodes due to external impact and thus further improving the safety of electrochemical devices. Also, when a mixture of inorganic particles having a high dielectric constant and inorganic particles having the ability to transport lithium ions is used, the synergetic effect thereof can be obtained.

In the present invention, the inorganic particle having the ability to transport lithium ions refers to inorganic particles containing lithium atom which are capable of moving lithium ions without storing the lithium. The inorganic particle having the ability to transport lithium ions may transfer and move lithium ions due to a kind of defect existing in the particle structure, so it is possible to improve lithium ion conductivity in the battery and also improve the performance of the battery. Non-limiting examples of the inorganic particles having the ability to transport lithium ions include lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} type glass (0<x<4, 0<y<13) such as 14Li₂O-9Al₂O₃-38TiO₂-39P₂O₅, lithium lanthanum titanate (LiₓLa_{y}TiO_{3,}0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, lithium nitride (LiₓN_{y}, 0<x<4, 0<y<2) such as Li₃N, SiS₂ type glass (LiₓSi_{y}S_{z}, 0<x<3, 0<y<2, 0<z<4) such as Li₃PO₄-Li₂S-SiS₂, P₂S₅ type glass (LiₓP_{y}S_{z}, 0<x<3, 0<y<3, 0<z<7) such as LiI-Li₂S-P₂S₅, and a mixture thereof.

In the separator used in the present invention, the inorganic particles in the porous organic-inorganic coating layer are not limited to their size, but preferably have 0.001 to 10 µm so as to form a coating layer having a uniform thickness and a proper porosity. If the inorganic particles have a size less than 0.001 µm, the dispersity thereof becomes insufficient to make it difficult to control the properties of a separator. If the inorganic particles have a size greater than 10 µm, the thickness of the porous organic-inorganic coating layer becomes increased to deteriorate mechanical properties and a pore size becomes excessively large to cause internal short circuit during charging and discharging of batteries.

Non-limiting examples of the binder polymer which may be used in the present invention include polyvinylidene fluoride-co-hexafluoropropylene, polyvinylidene fluoride-co-trichloroethylene, polymethyl methacrylate, polybutyl acrylate, polyacrylonitrile, polyvinylpyrrolidone, polyvinyl acetate, polyethylene-co-vinyl acetate, polyethylene oxide, cellulose acetate, cellulose acetate butyrate, cellulose acetate propionate, cyanoethylpullulan, cyanoethyl polyvinyl alcohol, cyanoethyl cellulose, cyanoethyl sucrose, pullulan and carboxymethyl cellulose, acrylonitrile-styrenebutadiene copolymer, polyimide, polyvinylidenefluoride, polyacrylonitrile, styrene butadiene rubber (SBR), and a mixture thereof. Besides, any one which has the above-mentioned properties may be used alone or in a mixture form.

In the separator used in the present invention, the porous organic-inorganic coating layer comprises the binder in an amount of 2 to 30 parts by weight, preferably 5 to 15 parts by weight, based on 100 parts by weight of the inorganic particles. If the amount of the binder polymer is less than 2 parts by weight, the inorganic particles may be released. If the amount of the binder polymer is higher than 30 parts by weight, the binder polymer may clog pores in the porous substrate to increase resistance and deteriorate the porosity of the porous organic-inorganic coating layer.

A battery case used in the present invention may be any one conventionally used in the art, and the shape of the battery case is not particularly limited depending on its uses. For example, the shape of the battery case may be cylindrical, prismatic, pouch, or coin.

Hereinafter, the present invention will be described in detail through specific examples. However, the description proposed herein is just a preferable example for the purpose of illustrations only, not intended to limit the scope of the invention, so it should be understood that the examples are provided for a more definite explanation to an ordinary person skilled in the art.

### Example 1

10g of SiO having an intermediate diameter of 5 µm was put in a rotary tubular furnace, to which argon gas was introduced at a rate of 0.5 L/minute, and the temperature of the furnace was raised to 800 °C at a speed of 5 °C/minute. The rotary tubular furnace was rotated at 10 rpm while introducing argon gas at a rate of 1.8 L/minute and acetylene gas at a rate of 0.3 L/minute for 3 hours, thereby carrying out heat treatment, to prepare a silicon-based anode active material having a conductive carbon coating layer. The conductive carbon coating layer exhibited to have carbon in an amount of 5.3 parts by weight based on 100 parts by weight of the core. Also, the shell was confirmed to have a thickness of 40 nm from a TEM analysis.

### Comparative Example 1

The procedures of Example 1 were repeated except that the heat treatment was carried out at 1050 °C to form a carbon coating layer.

### Preparation Example 1: Preparation of coin-type half-cell

The SiO/C composites prepared above were each mixed with graphite in a weight ratio of 85/15, and each of the resulting powders was used as an anode active material. The anode active material, carbon black as a conductive material, CMC and SBR were mixed with a ratio of 95/1/2/2 to obtain slurries for an anode. Each slurry obtained was coated, dried at 130 °C and compressed until an electrode density became 1.6 g/cc, followed by punching, to obtain an anode.

Metallic lithium was used as a cathode, and a polyolefin separator was interposed between the anode and the cathode obtained above, to obtain an electrode assembly.

Fluoro-ethylene carbonate (FEC), ethylene carbonate (EC) and diethyl carbonate (DEC) were mixed at a ratio of 10:20:70 (vol%), to which LiPF₆ were added, to obtain 1M LiPF₆ of non-aqueous electrolyte solution. Then, the electrolyte solution was introduced to the electrode assembly, to prepare a coin-type half-cell.

### Experimental Example 1: XRD Analysis of Anode Active Material

Anode active materials prepared in Example 1 and Comparative Example 1 were analyzed by an X-ray diffraction using an X-ray tube of 40 kV and 40 mA and Cu-Kα radiation under the conditions of 2θ/θ of 10 to 90°, step of 0/02° and scanning rate of 0.6°/min. The results thereof are shown in FIG. 1.

### Test Example 1: Charye/discharge Characteristics of Batteries

The half-cells prepared in Preparation Example 1, in which the anode active materials of Example 1 and Comparative Example 1 were each used, were evaluated for their charge/discharge characteristics and life characteristics, and the results thereof are shown in Table 1 and FIG. 1.

### <Charge/discharge conditions of coin-type half-cells>

- Charge condition: Charging of the batteries was conducted up to 5 mV at constant current, and completed when a current density reached 0.005C.
- Discharge condition: Discharging of the batteries was conducted up to 1.0 V at constant current (In the first cycle of charging and discharging, discharging was conducted up to 1.5V).
- In first cycle of charging and discharging, 0.1C/0.1C of charging/discharging and then 0.1C/0.1C of charging/discharging were conducted. After 50 cycles, batteries were disintegrated at their lithiated state, and salt and remaining electrolyte solution in the anode were removed, followed by measuring the thickness of the anode.

**Table 1**

| | Discharge Capacity (mAh/g) | Capacity before charging (mAh/g) | Normalized Capacity(%) @ 50^{th} cycle | Expansion (1.6 g/cc) |
|---|---|---|---|---|
| Ex. 1 | 535 | 636 | 86 | 45% |
| Com. Ex. 1 | 534 | 634 | 64 | 80% |

As can be seen from Table 1 showing the results of charging/discharging test, the anode active material of Example 1 was effectively controlled in volume expansion to provide good life characteristics, as compared with that of Comparative Example 1.

## Claims

1. An anode active material, comprising an amorphous SiOₓ-C composite with a core-shell structure consisting of a core comprising particles of a silicon oxide (SiOₓ) free of Si crystals and a shell which is a coating layer formed on at least a part of the surface of the core and comprising a carbon material.

2. The anode active material of claim 1, wherein the silicon oxide (SiOₓ) satisfies that x is 1 or less (x ≤ 1).

3. The anode active material of claim 1, wherein the silicon oxide (SiOₓ) is SiO satisfying that x is 1 (x = 1).

4. The anode active material of claim 1, wherein the silicon oxide (SiOₓ) particles free of Si crystals have an average diameter of 0.1 to 30 µm.

5. The anode active material of claim 1, wherein the silicon oxide (SiOₓ) particles free of Si crystals have a specific surface area of 0.5 to 100 m²/g, the specific surface area being measured by the BET method.

6. The anode active material of claim 1, wherein the shell is present in an amount of 1 to 30 parts by weight based on 100 parts by weight of the core.

7. The anode active material of claim 1, wherein the shell has a thickness of 0.01 to 5 µm.

8. An anode for a lithium secondary battery, comprising a current collector and an anode active material layer formed on at least one surface of the current collector and comprising an anode active material,
wherein the anode active material comprises the anode active material defined in any one of claims 1 to 7.

9. A lithium secondary battery, comprising a cathode, an anode, and a separator interposed between the cathode and the anode,
wherein the anode is defined in claim 8.

10. A method of preparing an anode active material comprising an amorphous SiOₓ-C composite with a core-shell structure, comprising:
providing particles of a silicon oxide (SiOₓ) as a core; and
coating a carbon precursor containing carbon on at least a part of the surface of the core, followed by heat treatment to form a shell as a coating layer,
wherein the heat treatment is carried out at a temperature less than 1000 °C.

11. The method of claim 1, wherein the heat treatment is carried out at a temperature of 900 °C or less.

12. An anode active material prepared by the method according to claim 10.
